# EUROPÄISCHE PATENTANMELDUNG

(11) **EP 2 053 685 A1**
(43) Veröffentlichungstag der Anmeldung: **29.04.2009**
(21) Anmeldenummer: 08018131.6
(22) Anmeldetag: 16.10.2008
(51) Int. Cl.: H01M 8/06, C25B 1/00, B01J 35/00, C01B 3/04, H01G 9/20, H01M 8/04

(54) **Brennstoffunabhängiges Energieversorgungssystem**

(30) Priorität: 24.10.2007 AT 17202007
(71) Anmelder: Vaillant GmbH, 42859 Remscheid (DE)
(72) Erfinder: Badenhop, Thomas, 51688 Wipperfürth (DE); Berg, Joachim, 42859 Remscheid (DE); Götz, Klaus, 42653 Solingen (DE); Kohlhage, Jörg, 45329 Essen (DE); Kraus, Matthias, 42929 Wermelskirchen (DE); Oerder, Bodo, 42897 Remscheid (DE); Paulus, Jochen, 42655 Solingen (DE)

(57) **Zusammenfassung**

Energieversorgungssystem, bestehend aus einer Vorrichtung zur photochemischen Umwandlung von Wasser in seinen Bestandteilen Wasserstoff und Sauerstoff und einem Brennstoffzellensystem, wobei der Wasserstoff einem Wasserstoffspeicher, angeordnet zwischen der Vorrichtung zur photochemischen Umwandlung von Wasser und dem Brennstoffzellensystem, zugeführt wird.

## Beschreibung

Die Erfindung bezieht sich auf ein brennstoffunabhängiges Energieversorgungssystem bestehend insbesondere aus einem Brennstoffzellensystem und einer Anlage zur photochemischen Umwandlung von Wasser.

Dezentrale Energieversorgungssysteme haben die Aufgabe, Gebäuden oder anderen Objekten, die keinen Zugang zu einem öffentlichen Gas- oder Stromnetz haben, mit Energie zu versorgen. Solche Objekte sind beispielsweise Ferien- und Landhäuser in entlegenen Gebieten.

Bekannte Hausenergieversorgungssysteme von Inselnetzen oder zur Notstromversorgung sind in der Regel motorgestützte Systeme, die aus einem Brennstoff mechanische Energie durch Verbrennung erzeugen und diese in elektrische Energie umwandeln. Da solche Energieversorgungssysteme von einer Brennstoffzufuhr abhängig sind, ist eine autonome Energieversorgung eingeschränkt oder gar nicht möglich.

Weitere Nachteile einer motorgestützten Energieversorgung liegen in der verringerten Ausfallsicherheit, der erhöhten Frequenz- und Spannungsschwankung und den hohen Kosten für das Bereithalten von Stromreserven.

Es sind auch Energieversorgungssysteme auf Basis der Sonnenenergie wie aus dem deutschen Patent 42 32 516 bekannt. Dort ist eine Schaltungsanordnung zur autonomen modularen Energieversorgung von an ein Inselnetz angeschlossenen Verbrauchern beschrieben, wobei parallel oder anstelle einer aufladbaren Speicherbatterie eine Brennstoffzelle mit Elektrolyseur oder eine umkehrbare Brennstoffzelle mit Wasserstoff als Sekundärträger eingesetzt werden kann. Aus dieser Schrift ist somit eine Kombination einer Brennstoffzelle und einer Photovoltaikanlage zur Gewährleistung einer unterbrechungsfreien Energieversorgung bekannt.

Aus DE 103 06 342 A1 ist bekannt, dass Wasserstoff als Energiespeicher für die Speisung von Brennstoffzellen dient. Die Elektrolysevorrichtung dient hierbei zugleich als Speichergehäuse für den Wasserstoff.

Aus DE 202 06 681 U1 geht hervor, dass in einem Metallhybrid-Wasserstoffspeicher zwischen einem Reformer und Brennstoffzellen Wasserstoff zwischengespeichert werden kann. Auch DE 195 33 097 A1 und DE 44 46 044 A1 zeigen jeweils einen Metallhybrid-Wasserstoffspeicher, der zwischen einem Elektrolyseur und Brennstoffzellen angeordnet ist. Als Elektrolyseur wird eine umgekehrt betriebe PEM-Zelle verwendet.

Eine Schwierigkeit bei der Nutzung der Sonnenergie besteht darin, dass der Bedarf an Energie in dem zu versorgenden Gebäude in der Regel nicht mit dem Angebot der verfügbaren Sonnenstrahlung gedeckt werden kann.

Der Erfindung liegt daher die Aufgabe zugrunde, ein Energieversorgungssystem zur Verfügung zu stellen, mit dem eine zuverlässige brennstoffunabhängige Energieversorgung insbesondere von Inselanlagen gewährleistet wird.

Erfindungsgemäß wird dies gemäß den Merkmalen des Anspruchs 1 mit einem Energieversorgungssystem bestehend aus einer Vorrichtung zur photochemischen Umwandlung von Wasser in seinen Bestandteilen Wasserstoff und Sauerstoff und einem Brennstoffzellensystem gelöst, wobei der dabei entstandene Wasserstoff einem Wasserstoffspeicher, angeordnet zwischen der Vorrichtung zur photochemischen Umwandlung von Wasser und dem Brennstoffzellensystem, zugeführt wird.

Weitere vorteilhafte Ausgestaltungen der Erfindung ergeben sich aus den Merkmalen der abhängigen Ansprüche und der Beschreibung.

Durch die Nutzung der Sonnenenergie wird eine brennstoffabhängige Energieversorgung umgangen.

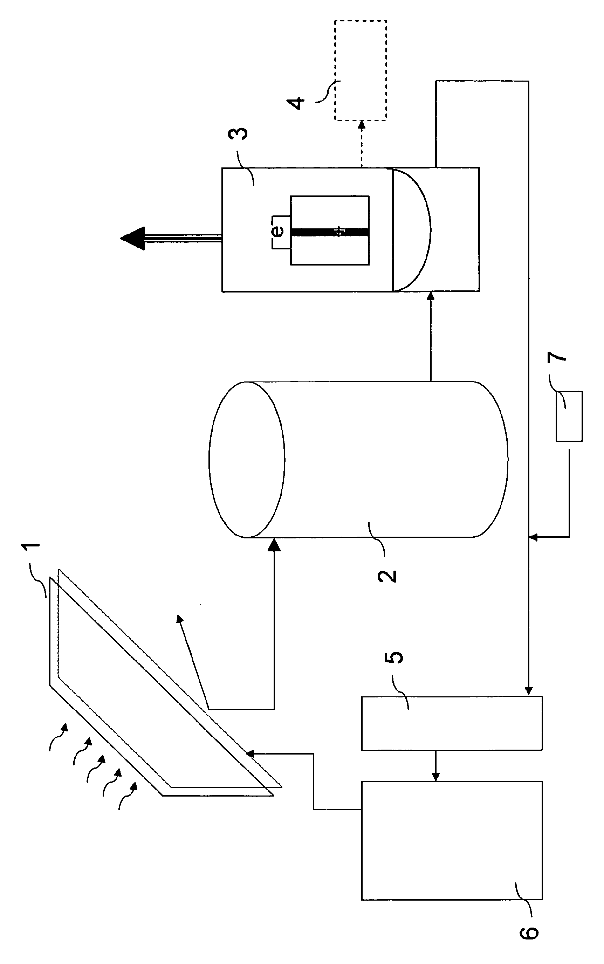

Die Erfindung wird nun anhand der Figur näher erläutert. Hierbei zeigt die Figur das erfindungsgemäße Energieversorgungssystem, das aus einer Vorrichtung 1 zur photochemischen Umwandlung von Wasser, einem Wasserstoffspeicher 2, einem Brennstoffzellensystem 3, einer Prozesswasseraufbereitungsvorrichtung 5 und einem Prozesswasserspeicher 6 besteht.

Wasser wird dabei an einem Photokatalysator unter der Sonneneinstrahlung photochemisch in seine Bestandteile Wasserstoff und Sauerstoff zersetzt. Als Photokatalysator wird vorzugsweise ein Halbleiter wie z.B. Titandioxid eingesetzt. Der Vorteil von Titandioxid als Photokatalysator ist seine Photoaktivität. Der dabei entstandene Wasserstoff wird in dem Wasserstoffspeicher 2 gespeichert. Der Wasserstoffspeicher 2 ist vorzugsweise ein Metallhybridspeicher, in dem der Wasserstoff durch Adsorption gespeichert wird. Dabei erfolgt eine Anlagerung des gasförmigen Wasserstoffs an metallischen Legierungen bei einem Druck von 0 bis 60 bar. Der niedrige Arbeitsdruck dieses Speichertyps begünstigt seine Anwendung in der Hausenergieversorgung. Eine Komprimierung und Speicherung in Hochdrucktanks oder die Verflüssigung mit anschließender Speicherung in Kryogentanks wären auch denkbar als eine Zwischenspeicherung des Wasserstoffs.

Es ist aber auch denkbar, dass der Wasserstoff direkt in das Brennstoffzellensystem 3 zugeführt wird, wo er elektrochemisch zu Wasser oxidiert.

Bei der elektrochemischen Oxidation des zugeführten Wasserstoffs entsteht neben dem Produktwasser auch elektrische und thermische Energie, die für eine Hausenergieversorgung 4 - gestrichelt dargestellt - genutzt werden kann.

Bei Bedarf wird aus dem Wasserstoffspeicher 2 Wasserstoff entnommen und dem Brennstoffzellensystem 3 zugeführt, wo dieser elektrochemisch mit dem Luftsauerstoff umgesetzt wird. Die dabei entstehende elektrische und thermische Energie wird im Haus genutzt oder aber auch zwischengespeichert. Dafür können Wärmespeicher wie z.B. Warmwassertanks oder elektrische Speicher wie z.B. Batterien oder aber auch eine Kombination der beiden Speicher eingesetzt werden.

Das Produktwasser gebildet im Brennstoffzellensystem 3 wird in einem Tank zwischengespeichert, bevor es wieder für die photochemische Zersetzung von Wasser genutzt wird. Aber auch Regenwasser aus der Regenwasseranlage 7 kann dem Produktwasser zugeführt werden, um eventuelle Verluste im Wasserkreislauf zu decken. Eine Wasseraufbereitungsanlage 5 und einen Wasserspeicher 6 sind der Anlage 1 zur photochemischen Umwandlung von Wasser vorgeschaltet, um Prozesswasser mit entsprechender Qualität zu erzeugen bzw. zu speichern.

## Patentansprüche

1. Energieversorgungssystem, bestehend aus einer Vorrichtung (1) zur Umwandlung von Wasser in seinen Bestandteilen Wasserstoff und Sauerstoff und einem Brennstoffzellensystem (3), **dadurch gekennzeichnet, dass** die Vorrichtung (1) zur Umwandlung von Wasser eine photochemische ist, welche zur Zersetzung von Wasser an einem Photokatalysator, vorzugsweise ein Halbleiter wie Titandioxid, unter Sonneneinstrahlung in seine Bestandteile Wasserstoff und Sauerstoff dient, und ein Wasserstoffspeicher (2) zwischen der Vorrichtung (1) zur photochemischen Umwandlung von Wasser und dem Brennstoffzellensystem (3) angeordnet ist.

2. Energieversorgungssystem nach Anspruch 1, **dadurch gekennzeichnet, dass** eine Leitung zur Zuführung des durch die Zuführung des Wasserstoffs aus dem Wasserstoffspeicher (2) in das Brennstoffzellensystem (3) entstandenen Wasser an die Vorrichtung (1) zur photochemischen Umwandlung von Wasser vorhanden ist.

3. Verfahren zum Betreiben eines Energieversorgungssystems nach Anspruch 1 oder 2, **dadurch gekennzeichnet, dass** die Zuführung des Wasserstoffs aus dem Wasserstoffspeicher (2) in das Brennstoffzellensystem (3) bedarfabhängig ist.
